Europäisches Patentamt

(19) European Patent Office

Office européen des brevets

(11) Publication number: **0 117 153**
**B1**

## (12) EUROPEAN PATENT SPECIFICATION

(45) Date of publication of patent specification: 08.07.87    (51) Int. Cl.⁴: **B 23 K 20/08**

(21) Application number: **84301110.7**

(22) Date of filing: **21.02.84**

(54) **Apparatus for forming an explosively expanded tube-tube sheet joint including a fibre reinforced insert having a closed end.**

(30) Priority: **22.02.83 US 468248**

(43) Date of publication of application:
**29.08.84 Bulletin 84/35**

(45) Publication of the grant of the patent:
**08.07.87 Bulletin 87/28**

(84) Designated Contracting States:
**DE FR GB SE**

(56) References cited:
**DE-B-1 527 902**
**DE-B-1 527 903**
**GB-A-1 124 891**
**US-A-3 175 618**

(73) Proprietor: **FOSTER WHEELER ENERGY CORPORATION**
**110 South Orange Avenue**
**Livingston New Jersey 07039 (US)**

(72) Inventor: **Berman, Irwin**
**110 South Orange Avenue**
**Livingston New Jersey 07039 (US)**

(74) Representative: **Bowman, Paul Alan et al**
**LLOYD WISE, TREGEAR & CO. Norman House**
**105-109 Strand**
**London WC2R OAE (GB)**

Courier Press, Leamington Spa, England.

## Description

This invention relates to an apparatus for explosively forming a tube-tube sheet joint and, more particularly, to such an apparatus utilizing an explosive which is placed within the tube to be expanded.

Many current designs of heat exchangers feature the use of a plurality of heat exchange tubes disposed within a tube sheet and adapted to receive a primary fluid which is passed through the tubes in a heat exchange relationship with a secondary fluid passing over the tubes.

Various techniques have evolved for securing the tubes within the tube sheet. For example, the tubes have been mechanically expanded into the tube sheets utilizing a mandrel or the like, or by rolling, i.e., by applying an outward radial force against the entire surface of the tubes. However, these techniques enjoy several disadvantages including local metal deformation, general lengthening of the tubes, and the application of axial stresses on the tube weld and compressive strains in the tube wall.

In order to overcome the foregoing disadvantages, a technique of explosively forming the tubes within the tube sheets has evolved. According to this technique, which is disclosed, for example, in British Patent No. 1124891, an explosive charge is disposed within the area of overlap between the tubes and the tube sheet and is surrounded by a force transmitting member which, upon detonation of the explosive charge, expands the tube uniformly against the inner wall of the tube sheet.

One problem associated with this type of explosive forming is the possibility of breakup due to longitudinal shock waves of the force-transmitting member. Also the gases and debris resulting from the explosion come out of the end of the force-transmitting member located adjacent the inner face of the tube sheet, which are unacceptable in many industrial applications, not the least of which is in connection with nuclear heat exchanger explosive expansion work.

It is therefore an object of the present invention to provide an apparatus for securing a tube within a tube sheet in which the tube is explosively formed within the tube sheet without the problems set forth above.

According to the present invention there is provided apparatus for expanding a tube into a bore formed in a tube sheet comprising a tubular force-transmitting member extending within the tube coextensive with the portion of the tube to be expanded, explosive means disposed in the bore of the force-transmitting member, so that the forces resulting from the explosion of the explosive means are uniformly transferred by the force-transmitting member, to the tube to expand the tube into the bore, in which a fibre material is embedded within the force-transmitting member and extends longitudinally along the member for increasing the longitudinal strength of the force-transmitting member.

The presence of the longitudinally extending fibre material greatly strengthens the force-transmitting member in the longitudinal direction and minimises the chance of breakup due to longitudinal shock waves. Preferably, the end portion of the force-transmitting member adjacent the inner surface of the tube sheet is closed so that it contains the debris and gases associated with the explosion of the explosive.

The invention will now be described with reference to the accompanying drawings in which:

Figure 1 is a longitudinal cross-sectional view of a tube-tube sheet interface including the apparatus of the present invention; and

Figure 2 is a cross-sectional view taken along the line 2—2 of Figure 1.

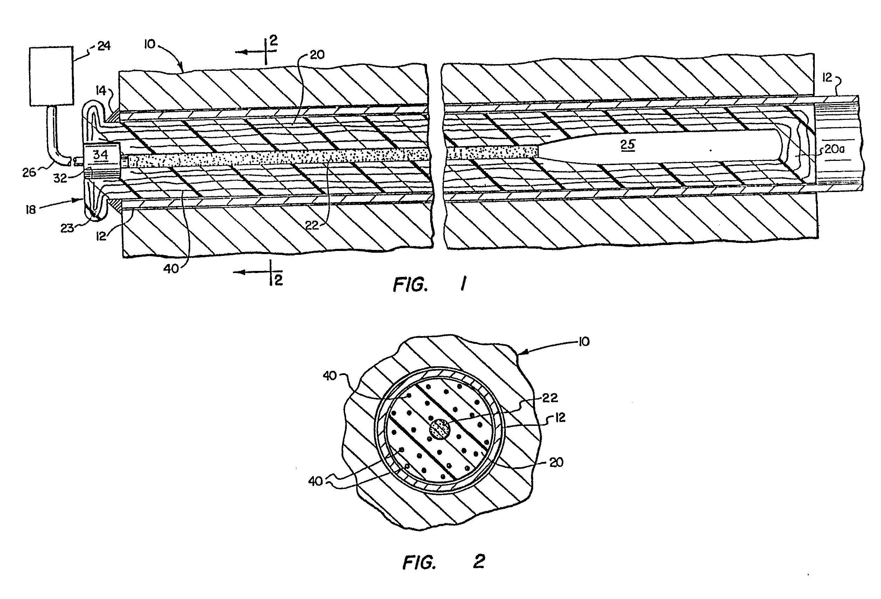

Referring the Figure 1 of the drawings, the reference numeral 10 refers in general to a tube sheet which can form a portion of a heat exchanger having a plurality of heat exchange tubes, one of which is shown by the reference numeral 12. Each tube 12 extends with a corresponding bore formed within the tube sheet 10, with one end of each of the tubes extending flush with the outer surface of the tube sheet, and the other end extending through the inner surface of the tube sheet.

The outer diameter of the tube 12 is slightly less than the inner diameter of the tube sheet bore and the tube may be secured to the tube sheet 10 by an annular weldment 14 which welds the flush end of the tube to the outer surface of the tube sheet. Only a portion of the tube 12 is shown in the interest of clarity, it being understood that the heat exchanger would also include a vessel enclosing the tube sheet and having suitable inlets and outlets for a primary heat exchange fluid and a secondary heat exchange fluid. According to a typical arrangement of this type, the tubes 12 could be U-shaped with both ends of each tube extending through the tube sheet 10 and the heat exchanger would include a partition, or the like. The primary heat exchange fluid would enter the tubes 12 through one end from an area to the left of the tube sheet 10 as viewed in Fig. 1, pass through the tubes in a heat exchange relation with the secondary fluid passing through the vessel to the right of the tube sheet, and exit through the other ends of the tubes.

The tube 12 is depicted in Fig. 1 prior to its being explosively formed in the tube sheet 10, along with the apparatus of the present invention for effecting the explosive forming. The latter apparatus includes an insert, shown in general by the reference numeral 18, which extends within the tube 12 and consists of a generally tubular force-transmitting member 20 and a rod-shaped explosive member 22 extending within the bore of the tubular member. The tubular member 20 has an outside diameter which is slightly less than the inner diameter of the tube 12, and a shoulder 23 is provided on the end of the tubular member which engages the weldment 14 to precisely locate the tubular member 20, and therefore the entire insert 18, within the tube 12. The length of the tubular member 20 is such that, when positioned within the tube as shown, it extends substantially coextensive with the area of overlap between the tube 12 and tube sheet 10. The end portion of the tubular member 20 extending adjacent the inner surface of the tube sheet 10 is closed, as shown by the reference numeral 20a.

The explosive member 22 is disposed within the bore of the tubular member 20 intermediate the ends thereof and contains a predetermined number of grains of explosive distributed uniformly along its axis. The bore of the tubular member 20 extending between its closed end portion 20a and the corresponding end portion of the explosive member 22 is enlarged to form an inner cavity, or chamber, 25.

A detonator cap 24 is provided externally of the tube sheet 10 and contains a very sensitive primary explosive which detonates readily when set off by a primer, an electrical blast cap, or the like, in a conventional manner. An energy transfer cord 26 connects the detonator cap 24 with the insert 18, and contains a relatively low number of grains of explosive, surrounded by a protective sheath preferably of a plastic material. The relative size of the sheath when compared to the explosive potential of the explosives of the cord 26 is such that the sheath will contain the debris and gases resulting from the explosion as will be described in detail later. Further details of the energy transfer cord 26 are disclosed in US—A—4494392.

Referring again to Fig. 1, a counter-bore 32 is formed in the tubular member 20 for receiving a booster 34, with the outer surface of the booster 34 extending flush with the member 20 and connected to the other and of the energy transfer cord 26.

Although not shown in the drawings, it is understood that the other end of the booster 34 is formed with a relatively small cavity in which an explosive is disposed, with the booster being positioned so that the explosive does not fall outside of the axial location of the tube sheet 10. It is noted that the corresponding end of the explosive member 22 is slightly spaced from the latter end portion of the booster 34.

A fiber material 40 is embedded in the force-transmitting member 20 and extends longitudinally for the length of the latter member. The fiber material 40 may be in the form of a continuous filament or may be in the form of a plurality of individual filaments. In either case, the sections or strands of the fiber material extends in a fairly closely spaced relationship as shown in Fig. 2. According to a preferred embodiment, the force-transmitting member 20 is formed of polyethylene and the fiber material 40 is in the form of fiberglass, graphite or boron.

The booster 34 is detonated by the energy transfer cord 26 which, in turn, detonates the explosive member 22, with the resulting forces being transmitted, via the force-transmitting member, uniformly to the tube 12 to cause a uniform expansion of the tube against the wall portion of the tube sheet 10 forming the corresponding tube-receiving bore. The booster 34 is necessary since, in order to properly contain the debris and gases resulting from the detonation of the energy transfer cord 26, the amount of explosive contained in the latter cord must be kept below that which is necessary to directly detonate the explosive member 22.

This arrangement thus provides a distinct advantage over prior art arrangements. For example, the provision of the longitudinally extending fiber material greatly strengthens the force-transmitting member in the longitudinal direction and minimizes the chance of breakup due to longitudinal shock waves.

Further, the presence of the closed end portion 20a of the tubular member 20 contains the debris and gases resulting from the explosion within the cavity 25 and thus prevents their escape past the inner surface of the tube sheet 10.

It is understood that several variations may be made in the foregoing without departing from the scope of the invention. For example, the exact materials used, including the number and type of explosives, in the various components can be varied within the scope of the invention.

## Claims

1. Apparatus for expanding a tube (12) into a bore formed in a tube sheet (10) comprising a tubular force-transmitting member (20) extending within the tube coextensive with the portions of the tube to be expanded, explosive means (22) disposed in the bore of the force-transmitting member, so that the forces resulting from the explosion of the explosive means are uniformly transferred by the force-transmitting member, to the tube to expand the tube into the bore, characterised in that a fibre material (40) is embedded within the force-transmitting member and extends longitudinally along the member for increasing the longitudinal strength of the force-transmitting member.

2. Apparatus as claimed in Claim 1 characterised in that the explosive means (22) is in the form of a rod-shaped member containing grains of explosive disposed uniformly along its axis.

3. Apparatus as claimed in Claim 1 or Claim 2 characterised in that the fibre material (40) includes a plurality of spaced parallel segments, each extending longitudinally along the force-transmitting member.

4. Apparatus as claimed in any preceding claim characterised in that the force-transmitting member has an open end adjacent the outer surface of the tube sheet for receiving the explosive means and a closed end (20a) for containing the debris and gases resulting from the explosion.

5. Apparatus as claimed in Claim 4 characterised in that a portion of the bore of the force-transmitting member not containing the explosive means and extending between the explosive means and the closed end of the force-transmitting member is enlarged for receiving the debris and gases.

6. A method for forming a tube-tube sheet joint which comprises inserting a tube into a bore formed in a tube sheet, inserting a tubular force-transmitting member (20) within the tube extending coextensively with the portion of the tube to be expanded, disposing explosive means (22) in the bore of the force-transmitting member and detonating the explosive means so that the forces resulting from the explosion are uniformly transferred by the force-transmitting member to the tube to expand the tube into the bore characterised in that a fibre material (40) is embedded within the force-transmitting member and extends longitudinally along the member for increasing the longitudinal strength of the force-transmitting member.

7. A method as claimed in Claim 6 characterised in that the explosive means (22) is in the form of a rod-shaped member containing grains of explosive disposed uniformly along its axis.

8. A method as claimed in Claim 6 or Claim 7 characterised in that the fibre material (40) includes a plurality of spaced parallel segments, each extending longitudinally along the force-transmitting member.

9. A method as claimed in any one of Claims 6 to 8 characterised in that the force-transmitting member has an open end adjacent the outer surface of the tube sheet for receiving the explosive means and a closed end (20a) for containing the debris and gases resulting from the explosion.

10. A method as claimed in Claim 9 characterised in that a portion of the bore of the force-transmitting member not containing the explosive means and extending between the explosive means and the closed end of the force-transmitting member is enlarged for receiving the debris and gases.

**Patentansprüche**

1. Vorrichtung zum Ausdehnen eines Rohres (12) an eine Bohrungswand, die in einer Rohrplatte (10) gebildet ist, enthaltend ein röhrenförmiges Kraftübertragungsteil (20), das sich innerhalb des Rohres über die gleiche Länge erstreckt wie derjenige Teil des Rohres, der ausgedehnt werden soll, sowie in einer Bohrung des Kraftübertragungsteils derart angeordnete Sprengstoffe (22), daß die von der Explosion der Sprengstoffe herrührenden Kräfte durch das Kraftübertragungsteil gleichmäßig auf das Rohr übertragen werden, und das Rohr an die Bohrungswand ausdehnen, dadurch gekennzeichnet, daß ein Fasermaterial (40) in dem Kraftübertragungsteil eingebettet ist und sich längs des Teiles erstreckt, um die Längsfestigkeit des Kraftübertragungsteils zu erhöhen.

2. Vorrichtung gemäß Anspruch 1, dadurch gekennzeichnet, daß die Sprengstoffe (22) in Form eines stabförmigen Teils vorliegen, das gleichmäßig längs seiner Achse verteilte Explosivstoffkörner enthält.

3. Vorrichtung gemäß Anspruch 1 oder 2, dadurch gekennzeichnet, daß das Fasermaterial (40) eine Anzahl von einander im Abstand angeordneter paralleler Abschnitte umfaßt, die sich jeweils in Längsrichtung längs des Kraftübergungsteils erstrecken.

4. Vorrichtung gemäß einem der vorhergehenden Ansprüche, dadurch gekennzeichnet, daß das Kraftübertragungsteil ein offenes Ende an der äußeren Oberfläche der Rohrplatte zur Aufnahme der Explosivstoffe sowie ein geschlossenes Ende (20a) zum Festhalten der Abfallprodukte und -gase der Explosion aufweist.

5. Vorrichtung gemäß Anspruch 4, dadurch gekennzeichnet, daß ein Abschnitt der Bohrung des Kraftübertragungsteils, der die Explosivstoffe nicht enthält und sich zwischen den Explosivstoffen und dem geschlossenen Ende des Kraftübertragungsteils erstreckt, zur Aufnahme der Abfallprodukte und -gase vergrößert ist.

6. Verfahren zum Herstellen einer Verbindung von Rohrwandung zu Rohrwandung, bei dem man ein Rohr in eine in einer Rohrplatte gebildete Bohrung einsetzt, ein röhrenförmiges Kraftübertragungsteil (20) in das Rohr einsetzt, das sich über dieselbe Länge wie der auszudehnende Abschnitt des Rohres erstreckt, Explosivstoffe (22) in einer Bohrung des Kraftübertragungsteils anordnet und die Explosivstoffe derart zur Detonation bringt, daß die von der Explosion herrührenden Kräfte durch das Kraftübertragungsteil gleichmäßig auf das Rohr übertragen werden und dieses an die Bohrung heran ausdehnen, dadurch gekennzeichnet, daß ein Fasermaterial (40) in das Kraftübertragungsteil eingebettet wird und sich in Längsrichtung längs dieses Teils erstreckt, um die Längsfestigkeit des Kraftübertragungsteils zu erhöhen.

7. Verfahren gemäß Anspruch 6, dadurch gekennzeichnet, daß die Explosivstoffe (22) in der Form eines stabförmigen Teils vorliegen, das gleichmäßig über die Länge seiner Achse verteilte Explosivstoffkörner enthält.

8. Verfahren gemäß Anspruch 6 oder 7, dadurch gekennzeichnet, daß das Fasermaterial (40) eine Vielzahl von voneinander im Abstand angeordneten, parallelen Abschnitten aufweist, die sich jeweils in Längsrichtung längs des Kraftübertragungsteils erstrecken.

9. Verfahren gemäß einem der Ansprüche 6 bis 8, dadurch gekennzeichnet, daß das Kraftübertragungsteil ein offenes Ende an der Außenfläche der Rohrplatte zur Aufnahme der Explosivstoffe sowie ein geschlossenes Ende (20a) zum Festhalten der Abfallprodukte und -gase der Explosion aufweist.

10. Verfahren gemäß Anspruch 9, dadurch gekennzeichnet, daß eine Abschnitt der Bohrung des Kraftübertragungsteils, der die Explosivstoffe nicht enthält und sich zwischen den Explosivstoffen und dem geschlossenen Ende des Kraftübertragungsteils erstreckt, zur Aufnahme der Abfallprodukte und -gase vergrößert ist.

**Revendications**

1. Dispositif permettant de provoquer la dilatation d'un tube (12) dans un alésage réalisé dans une plaque de support de tubes (10) et comprenant un organe tubulaire de transmission de forces (20) s'étendant dans le tube sur la même distance que le tronçon du tube devant être dilaté, des moyens explosifs (22) disposés dans l'alésage de l'organe de transmission de forces pour que les forces résultant de l'explosion des moyens explosifs soient transmises uniformément au tube par l'organe de transmission de forces, pour provoquer la dilation du tube dans l'alésage, caractérisé en ce qu'une matière fibreuse (40) est noyée dans l'organe de transmission de forces et s'étend longitudinalement dans cet organe pour augmenter la résistance mécanique longitudinale de l'organe de transmission de forces.

2. Dispositif selon la revendication 1, caractérisé en ce que les moyens explosifs (22) se présentent sous la forme d'une tige contenant des grains d'explosif disposés uniformément le long de son axe.

3. Dispositif selon la revendication 1 ou la revendication 2, caractérisé en ce que la matière fibreuse (40) comprend une multiplisité de segments parallèles espacés s'étendant chacun longitudinalement dans l'organe de transmission de forces.

4. Dispositif selon l'une quelconque des revendications précédentes, caractérisé en ce que l'organe de transmission de forces présente une extrémité ouverte contiguë à la surface extérieure de la plaque de support des tubes, pour recevoir les moyens explosifs, et une extrémité fermée (20a) destinée à retenir les débris et les gaz résultant de l'explosion.

5. Dispositif selon la revendication 4, caractérisé en ce qu'un tronçon de l'alésage de l'organe de transmission de forces, qui ne contient pas des moyens explosifs et qui s'étend entre les moyens explosifs et l'extrémité fermée de l'organe de transmission de forces, est élargi pour recevoir les débris et les gaz.

6. Procédé de formation d'une jonction tube-plaque de support de tubes, consistant à insérer un tube dans un alésage réalisé dans une plaque de support, à insérer un organe tubulaire de transmission de forces (20) dans le tube pour qu'il s'étende sur la même distance que le tronçon du tube devant subir la dilatation, à déposer des moyens explosifs (22) dans l'alésage de lorgane de transmission de forces et à faire détoner les moyens explosifs pour que les forces résultant de l'explosion soient transmises uniformément au tube par l'organe de transmission de forces, pour provoquer la dilatation du tube dans l'alésage, caractérisé en ce qu'une matière fibreuse (40) est noyée dans l'organe de transmission de forces et s'étend longitudinalement dans cet organe pour augmenter la résistance mécanique longitudinale de l'organe de transmission de forces.

7. Procédé selon la revendication 6, caractérisé en ce que les moyens explosifs (22) se présentent sous la forme d'une tige contenant des grains d'explosif disposés uniformément le long de son axe.

8. Procédé selon la revendication 6 ou la revendication 7, caractérisé en ce que la matière fibreuse (40) comprend une multiplicité de segments parallèles espacés, s'étendant chacun longitudinalement dans l'organe de transmission de forces.

9. Procédé selon l'une quelconque des revendications 6 à 8, caractérisé en ce que l'organe de transmission de forces présente une extrémité ouverte contiguë à la surface extérieure de la plaque de support des tubes, pour recevoir les moyens explosifs, et une extrémité fermée (20a) destinée à retenir les débris et les gaz résultant de l'explosion.

10. Procédé selon la revendication 9, caractérisé en ce qu'un tronçon de l'alésage de l'organe de transmission de forces, qui ne contient pas les moyens explosifs et qui s'étend entre les moyens explosifs et l'extrémité fermée de l'organe de transmission de forces, est élargi pour recevoir les débris et les gaz.

FIG. 1

FIG. 2

0 117 153